(19) Europäisches Patentamt
European Patent Office
Office européen des brevets

(11) **EP 4 227 659 A1**

(12) **EUROPEAN PATENT APPLICATION**

(43) Date of publication:
**16.08.2023 Bulletin 2023/33**

(21) Application number: **22156345.5**

(22) Date of filing: **11.02.2022**

(51) International Patent Classification (IPC):
***G01M 3/00*** *(2006.01)*

(52) Cooperative Patent Classification (CPC):
**G01M 3/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BASF SE**
**67056 Ludwigshafen am Rhein (DE)**

(72) Inventors:
• **Kasten, Kristian**
**67056 Ludwigshafen am Rhein (DE)**

• **Zhu, Caroline Charlotte**
**47057 Duisburg (DE)**
• **Walzenbach, Alexander**
**67056 Ludwigshafen am Rhein (DE)**
• **Ding, Steven Xianchun**
**47057 Duisburg (DE)**

(74) Representative: **BASF IP Association**
**BASF SE**
**GBI-C006**
**67056 Ludwigshafen (DE)**

(54) **METHOD AND SYSTEM FOR DETECTION OF LEAKAGES IN PROCESS INDUSTRY**

(57) Disclosed are a method and system for detecting a gaseous and/or liquid leakage in an industrial processing plant or processing plant equipment, based on data being provided by at least one sensor (100), wherein process-related data (200, 205, 215 - 235) and environmental data (210) are provided in order to combine the process-related data (200, 205, 215 - 235) and the environmental data (210), and wherein, for the evaluation of a potential leakage, a similarity measure between the process-related data (200, 205, 215 - 235) and the environmental data (210) is determined.

FIG.2

**Description**

FIELD OF THE INVENTION

The present invention concerns process industry plants and facilities and, more particularly, the detection and/or prevention of unwanted leaking of liquids or gases.

BACKGROUND OF THE INVENTION

The risk of leakages of liquid or gaseous substances in process industry is environmentally critical and potentially hazardous. Such leakages in a chemical plant may affect the process reliability and could build potential hazard for the environment. At present, the emission of greenhouse gas is discussed intensively in public, whereas a considerable part of the overall greenhouse gas is emitted by the industrial sector. As stated in the German "climate action plan 2050", industrial greenhouse gas emissions are set to at least halve in 2030 compared to 1990.

However, the framework of the "Climate Protection Plan 2050" mainly focuses on measuring known emissions. In contrast to that, irregular leakages are hard to measure and evaluate, whereas incipient industrial leakages could remarkably affect the environment. Therefore, an integral monitoring concept is needed capable to detect these faults.

Known approaches of leakage detection and prevention focus on individual monitoring of a process and its environment. The major challenge is the lack of an a-priori knowledge about a potential leakage. Additionally, regulations for emissions are becoming increasingly strict, which increases the industrial need for suitable solutions. Hence, in the industrial sector, leakage detection and prevention are still of increasing importance.

It is therefore an object of the present invention to provide a method and system for reliable, robust and safe detection and/or prevention of mentioned leakages and, more particularly, of irregular or only incipient/initial leakages with still very low leak rates.

SUMMARY OF THE INVENTION

The underlying idea of the present invention is to combine or merge process data and environmental data of an underlying process, processing plant or processing plant equipment. Surprisingly, it has been found that through integration of environmental measurements into a process monitoring process, state-of-the-art leakage detection can be improved considerably, even without additional instrumentation or sensor devices.

Therefore, the present invention proposes a novel model- or data-driven scheme for monitoring an industrial process or plant in view of potential leakage of liquid and/or gaseous substances, including the coupling with the environment of the process or plant, particularly providing the ability to detect incipient leakages. Further, the spatial localization of a leakage within a complex chemical plant is enabled and leads to an improvement in safety and reliability of leakage detection and corresponding decision making. Finally, the concept is suitable to extend already implemented monitoring schemes in a plug-and-play manner and therefore is flexible to include additional environmental sensors.

It has to be noted that leak/leakage detection generally is a rather complex process wherein large leaks can be effectively detected e.g. by gas detectors. The sensitivity of such sensors can be considerably reduced by means of cross-sensitivities of the detector, e.g. humidity and environmental/outside temperature, etc. In addition, a gas detector signal in most cases is rather noisy and thus makes changes very difficult to detect. According to the prior art, both the process and the environment were monitored individually. In contrast to this procedure, it is proposed herein to jointly perform the monitoring of the process and the possible interactions between the process and the environment.

The approach according to the invention provides the following improvements vis-à-vis the prior art:

- Earlier detection wherein small leaks can be detected with a much better reliability and robustness;
- Possible use of existing sensors, e.g., most of the already existing sensors can be used for the present approach;
- Precise localization of leaks is possible, since an underlying leak can be reduced to a subset of an overall process by means of the connection between the process and the environment of an underlying process asset, thus allowing for an in-depth root cause analysis;
- Reduction of false alarms, because in case of a gas cloud being blown through an industrial plant or facility, which is not originated or caused by any of the facility assets, no connection between the process and the environment can be established. Therefore, in such a situation no alarm is triggered for the monitored and error-free asset.

According to one aspect of the invention, the proposed method for detecting a gaseous and/or liquid leakage in an industrial processing plant or processing plant equipment is based on data being provided by at least one sensor, wherein process-related data and environmental data are provided in order to combine the process-related data and the environmental data, and wherein, for the evaluation of a potential leakage, a similarity measure between the process-related data and the environmental data is determined.

According to another aspect of the proposed method, the similarity between process measurement values and environmental measurement values is determined or expressed based on a correlation analysis, similarity analysis or root cause analysis.

According to another aspect of the proposed method, a pre-determined limit of a sensor value for an environment is evaluated based on a threshold.

According to another aspect of the proposed method, evaluation of a process is accomplished by means of an FDI scheme and wherein a leakage event is defined as a parameter fault in the FDI scheme. wherein the input and output variables for the FDI scheme are measured process-related variables, which are evaluated based on a model description for the industrial processing plant or processing plant equipment.

According to another aspect of the proposed method, the process-related data and the environmental data comprise respective input data and output data of one or more of the following physical properties of the industrial processing plant or processing plant equipment:

- The temperature of the industrial processing plant or processing plant equipment;
- the pressure of the industrial processing plant or processing plant equipment;
- the electrical current of the industrial processing plant or processing plant equipment;
- the temperature of the industrial processing plant or processing plant equipment;
- a performance indicator of the industrial processing plant or processing plant equipment;
- the environmental temperature;
- the environmental humidity.

According to another aspect of the proposed method, a process-environment system (PES) is provided which uses data from a process and its environment in a joint manner and which is used for modelling changing aspects of the interconnection between a separate process model and a separate environment model, based on respective input variables.

According to another aspect of the proposed method, the evaluation of a potential leakage is based on the relationship between the process and the environment, wherein it is separated between the process and the environment, based on physical boundaries, wherein a fault-free case is assumed to be a closed system which thermodynamically allows energy but no mass transfer between the process and the environment and wherein a faulty case is assumed to be an open system enabling mass and energy to be transferred between the process and the environment. Hereby it can be further assumed that the environment can, in turn, influence the process.

According to another aspect of the proposed method, the mentioned relationship between the process and the environment is evaluated by means of at least one underlying model which is based on input variables and output variables of the PES, wherein directions of cause and effect between the process and the environment are synchronized, and wherein measured process-related data and environmental data are separated into cause-variables and effect-variables.

According to still another aspect of the proposed method, the evaluation of a potential leakage is based on a two-fold feature generation, including a first feature generation step according to which the process-related data are mapped into a suitable feature space, and including second feature generation steps using the PES for performing an identification, wherein the second feature generation steps are performed in a recurring way, and wherein both types of generated features are fed into a classifier.

Further proposed is a method for condition monitoring of an industrial processing plant or processing plant equipment in order to detect a gaseous and/or liquid leakage or to localize an incipient leakage or to detect processing faults, or for providing an according root-cause analysis, based on the above-described method.

The further proposed system for the detection of a gaseous and/or liquid leakage in an industrial processing plant or processing plant equipment comprises at least one sensor for providing process-related data and environmental data, and comprises processing means in order to combine the process-related data and the environmental data and to evaluate a potential leakage based on a similarity measure between the process-related data and the environmental data.

According to another aspect of the proposed system, the at least one sensor comprises one or more of the following sensors or detectors:

- At least one gas detector;
- at least one ambient temperature sensor;
- at least one humidity sensor;
- at least one line- and area sensor;
- at least one monitoring camera;

- at least one acoustic sensor;
- at least one autonomous vehicle equipped with at least one gas detector and/or any of the preceding detectors/sensors.

It has to be noted that the mentioned physical properties and sensors/detectors are only preferred and, in principle, any physical property or kind of sensor/detector can be used which provides data that can be used for the herein described leakage detection.

According to another aspect, the system according to the present invention may also concern an improvement of the sensor hardware itself because known gas detectors are point sensors which are based on chemo-resistive, optical and catalytic detection technology. In recent years selectivity and sensitivity as well as a reduction in cross-sensitive influences like air temperature and humidity have been improved. However, such point detectors are limited in detection range which supports the focus on point detector networks.

According to a further aspect, the system according to the present invention may also include known line- and area sensors covering wider measurement ranges. Besides classical detection technologies like common monitoring cameras, other known technologies like acoustic sensors can be used. Thereupon, autonomous vehicles, e.g. driving or flying drones, equipped with gas detectors can be used to reduce on the one hand the risk for humans and on the other hand may allow for an implementation of expensive sensor technologies or may enable the monitoring of large industrial plant areas.

According to a further aspect, the system according to the present invention may include camera-based systems for the detection of leaks and corresponding data processing equipment or for processing and filtering accordingly produced images. In addition, such data processing equipment can be set up in order to enable the precise localization of detected leakages.

According to a further aspect, the system according to the present invention may include a model-based approach for analyzing detected sensor signals or obtained camera images. Such approaches may use thermodynamic models of the leaking system or a time difference-based detection of a sensor network. In addition, more complex models can be evaluated taking influences of e.g. environmental wind or environmental temperature profiles or fluctuations into account.

Further proposed is a computer-implemented method or system for the detection of a gaseous and/or liquid leakage in an industrial processing plant or processing plant equipment, which is based on process-related data and environmental data. These data can be combined in order to evaluate a potential leakage based on a similarity measure between the process-related data and the environmental data and/or based on a cause and effect related evaluation where the time delay between evaluated data or signals can provide important information regarding the direction of action.

BRIEF DESCRIPTION OF THE DRAWINGS

FIG. 1    shows a prior known method for separation of process and environmental data, which is only based on a common threshold approach for decision making and wherein process and environmental data are not joined/merged for detection or monitoring;

FIG. 2    shows a schematic piping and instrumentation diagram of a screw compressor for which the present invention can be used, wherein process data and environmental data are combined, i.e. joined or merged;

FIG. 3    depicts a combined block/flow diagram illustrating an embodiment of the method and system according to the invention which jointly utilizes data from process and environment;

FIG. 4    depicts a flow diagram schematically showing method steps according to the invention during an online operation wherein all layers can be designed depending on requirements of an underlying process and environment;

FIG. 5    depicts bar graphs of an industrial use case of a screw compressor, for illustrating coupling features for the coupling between environment and process according to the invention;

FIG. 6    depicts diagrams of certain data being measured with a screw compressor as in FIG. 5, in order to illustrate the classification performance based on fault-free data;

FIG. 7    depicts similar diagrams as in FIG. 6 but illustrating the classification performance based on faulty data.

DETAILED DESCRIPTION OF EMBODIMENTS

Known approaches are well-established in the context of fault detection, but a reliable and robust fault isolation and identification of a root cause are very crucial in industrial (plant) applications. Beside the detection of a gas leakage as such, also the spatial location of a detected leak within a large-scale plant is important, in order to localize and to resolve such a leakage.

Additionally, the high density of plant assets and facilities like pipes in case of a chemical plant or facility, also combined with the complex interactions within a chemical plant, pose special challenges. Only exemplarily, a leakage in another part of the plant which is not monitored should not trigger an alarm signal. On the contrary, only the asset which is the root cause should raise an alarm.

Hence, the implementation in case of a chemical plant, at a larger scale, is limited by the following factors:

- Non-available data: In most cases a priory modelling of leakages is not possible because of a mostly unknown connection between environment and processes under consideration. Further, the set of historical data about gas leakages is very limited. Therefore, the concept design usually relies on fault-free data only.

- Model complexity: Chemical plants develop over time and models have to be capable to adapt to these changes. Further, the setup of a model should have limited amount of expenditure to be beneficial in many use-cases.

- Computational efforts: The model has to be executable on standard computer hardware to allow scalability and enable "real-time" operation.

- Additional sensors: In contrast to new chemical plants, existing plants are equipped with specific sets of sensors. Implementing additional sensors is expensive and could possibly interfere ongoing production.

However, the present invention addresses the following particular leakage detection issues:

- to detect early/ incipient leakages;

- to perform a reliable spatial location and thus to improve the quality of immediate action;

- to propose applicable solutions for different use-cases with minimal changes in the respective parameter settings; and

- to utilize only existing equipment and instrumentation, e.g. a monitoring based on already implemented state-of-the-art gas detectors.

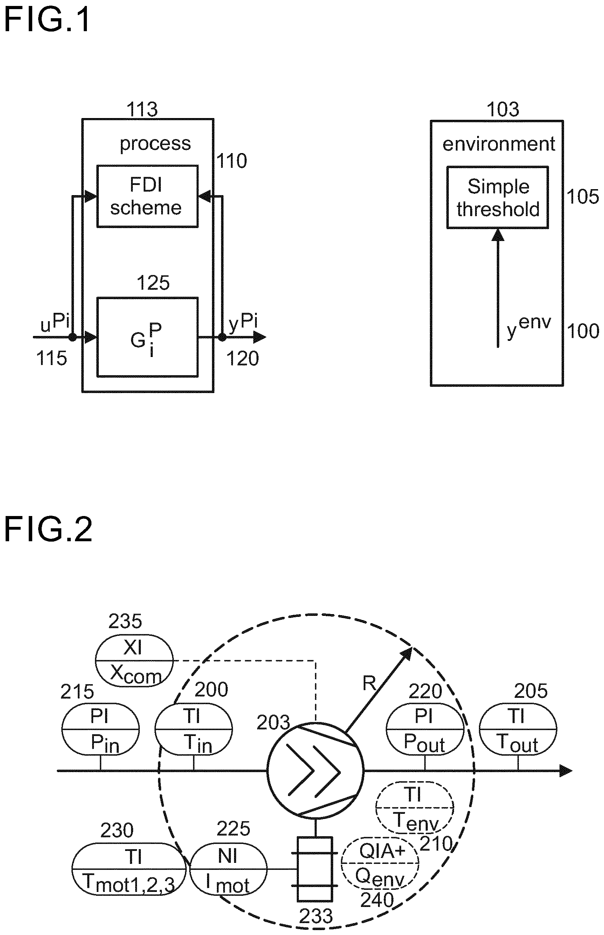

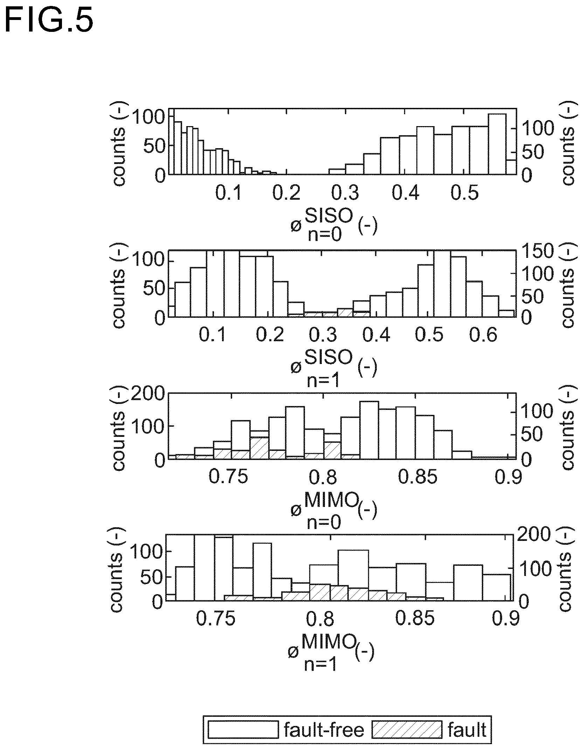

Referring now to FIG. 1, an exemplary leakage detection according to the prior art for an industrial screw compressor (see also FIG. 5 ff.) is achieved by checking a predetermined limit of a sensor value $y^{env}$ 100 for the environment 103, based on a static threshold 105. The evaluation of the process 113 under investigation is done based on an underlying known "FDI" (= fault detection and isolation) scheme 110. Hereby, the event of a leakage is typically defined as a parameter fault in the FDI scheme. The input and output variables for the FDI are measured process-related variables $u^{pi}$ 115 and $y^{pi}$ 120 which are evaluated based on an underlying model description $G_i^p$ 125. It has to be mentioned that the evaluation of the process 113 under investigation can also be performed by common statistical methods or even by means of machine learning via a neuronal network (i.e. artificial intelligence).

The threshold limit is determined according to certain legal requirements, for this industrial use case, is based on a German DIN standard published in 2015 by D. I. f. N. e.V., "Arbeitsplatzat-mosphäre - Elektrische Geräte für die direkte Detektion und direkte Konzentrationsmessung toxischer Gase und Dämpfe," Allgemeine Anforderungen und Prüfverfahren, vol. DIN EN 45544-1. However, such an alarm trigger is generally not sufficient to detect incipient leakages or to provide detailed information about the localization of a faulty plant or facility asset. Hence, the status of a specific process asset and its interaction with the environment are key features for an improved process monitoring leading to a more reliable operation of an entire chemical plant.

In FIG. 2 described in the following, based on this industrial use case, a leakage detection according to the present invention is illustrated by way of a schematic piping and instrumentation diagram for such a real screw compressor 203. The diagram, in the underlying embodiment, contains input data 200 and output data 205 about the temperature of the compressor (i.e. process accordingly), data 210 about the environmental temperature, input data 215 and output data 220 about the compressor pressure, data 225 about the electrical current in the compressor, data 230 about the winding 233 temperature of the electric motor of the compressor, and data 235 about the position of a performance slider.

The underlying sensor equipment includes a gas detector 240 and an ambient temperature measurement 210 in the environment of the screw compressor. The available sensors can be split up into environment related sensors (grey dashed line) and process related sensors (black solid line). Whereas the choice of process measurements is directly related to the monitored asset/ machine itself (upstream and downstream available sensors) the choice of environment sensors is more complex. Therefore, all available environment measurements should be considered if the monitored asset could have an impact on its environment or vice versa which can be measured by these sensors.

Because cause and effect are spatial limited for illustration the area described by "R" should be considered in the monitoring approach. "R" is not necessarily a sphere and may depend on other environmental effects like wind etc.

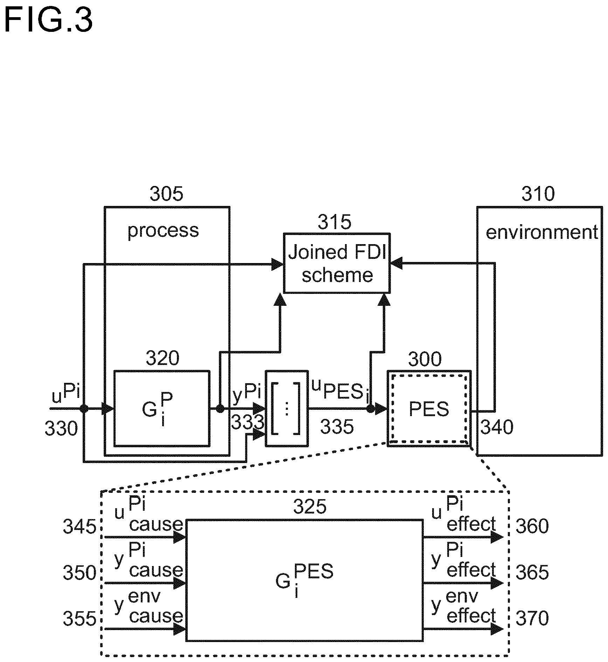

FIG. 3 shows an embodiment of a process-environment system (PES) 300 which uses data from a process i 305 and its environment 310 in a joint manner, i.e. as joint FDI scheme 315, and which is used for Monitoring the changing aspects of the interconnection between a process 305 and environment 310. Input 330 and output data 333 of the process are part of the joined FDI scheme 315 and input of the PES 300. 300 is shown in detail in 325 whereas it is split up into a cause and an effect, regardless its relation to process or environment. PES input 335 output 340 are connected by a data driven description of the coupling of process and environment. Both, 355 and 340 are also part of 315, so that all available information is feed into 315.

In the fault-free case, there exists a relationship between the shown process i 305 and the environment 310. Multiplicative faults within the domain of the process i 305 may influence (i) the process itself and the large-scale system in which it is embedded and (ii) they may directly affect the near environment. In the case of a gas leakage, for instance, the clear and sharp separation between the process and environment given by the physical boundaries will be broken up. Thermodynamically, the fault-free case is comparable to a closed system which allows energy but no mass transfer, whereas the faulty case is an open system enabling mass and energy to be transferred. Note that the environment can in turn influence the process I 305.

In the following, the relationship between processes 305 and environment 310 is evaluated as illustrated in Fig. 3. To define input variables $u_{PESi}$ 335. and output variables $y_{PESi}$ 340 for the PES and to synchronize the directions of cause and effect between process 305 and environment 310, the measured process-related variables $u^{pi}$ and $y^{pi}$ and the environment sensors $y^{env}$ are separated into cause-variables 345, 350, 355 and effect-variables 360, 365, 370 as follows:

$$u^{p_i} = \begin{vmatrix} u^{p_i}_{cause} \\ u^{p_i}_{effect} \end{vmatrix} \in \mathbb{R}^{k^p_u}, \quad y^{p_i} = \begin{vmatrix} y^{p_i}_{cause} \\ y^{p_i}_{effect} \end{vmatrix} \in \mathbb{R}^{k^p_y}, \quad y^{env} = \begin{vmatrix} y^{env}_{cause} \\ y^{env}_{effect} \end{vmatrix} \in \mathbb{R}^{k^{env}_y}.$$

$$(1)$$

This grouping based on causes and effects can be done empirically, based on further analysis or executed based on additional methods and executed automatically. The input and output variables of the PES are generally defined as

$$u_{PES_i} = \begin{bmatrix} u^{p_i}_{cause} \\ y^{p_i}_{cause} \\ y^{env}_{cause} \end{bmatrix} \in \mathbb{R}^{k_u}, \quad y_{PES_i} = \begin{bmatrix} u^{p_i}_{effect} \\ y^{p_i}_{effect} \\ y^{env}_{effect} \end{bmatrix} \in \mathbb{R}^{k_y}.$$

$$(2)$$

With this notation, the following model description $G_i^{PES}(k)$ is introduced:

$$\sum_{\alpha=0}^{n_a} A_\alpha^{PES_i} y_{PES_i}(k+\alpha) = -\sum_{\beta=0}^{n_b} B_\beta^{PES_i} u_{PES_i}(k+\beta) - \sum_{\gamma=0}^{n_c} C_\gamma^{PES_i} \varepsilon_{PES_i}(k+\gamma)$$

$$(3)$$

where the parameter matrices $A_\alpha^{PES_i}$, $B_\beta^{PES_i}$ generally represent influences between cause and effect in the frame of the i-th PES. It has to be noted that the model description $G_i^{PES}(k)$ is only exemplary and the herein described evaluation can be based on a different model approach. The variable $\in_{PESi}$ represents zero-mean white noise, and for $\alpha$, $\beta$, $\gamma = 0$, a static model can be obtained. It is noted hereby that some classes of faults will affect the process-environment system. A leakage, for instance, is not only a multiplicative fault within a process i but can also be interpreted as a parameter fault in the PES. Thus, with a reasonably chosen evaluation one can make conclusions about the operation of the process environment system.

To be more specific, let $\Phi(...)$ be a mapping or function applied on the system description. Then, in order to detect multiplicative faults, the following decision logic can be formulated:

$$\phi(k) := \begin{cases} \phi(G^{PES}_{i,0}(k)) = c \approx \text{const.} & \text{fault-free, nominal connection between asset and ambient} \\ \phi(G^{PES}_{i,\text{fault}}(k)) \neq c & \text{faulty, asset has direct influence on ambient} \end{cases}$$

$$(4)$$

where $G_{i,0}^{PES}(k)$ and $G_{i,\text{fault}}^{PES}(k)$ denote the system in the nominal and faulty case, respectively, at time instance k. The constant c represents the general relationship which will be present due to nominal interaction between the environment and process.

It has to be noted that the defined PES in equation (3) is typically unknown for the following reasons:

(i) In general, models for different types of faults (e.g. propagation of gases in case of a leakage) exist, but are not convenient to use for online fault diagnosis in industry due to their high complexity and computational load. The described modelling approach could vary for different settings making rigorous models impractical.

(ii) Various different types of faults can occur. Yet, an underlying process owner's (i.e. company's) database may not contain data from all possible faults and their severity. For this reason, in many cases, the PES cannot be identified a-priori, e.g. based on accordingly labeled faulty data. Therefore, it is proposed to identify the PES $G_i^{PES}$ (k) based on fault-free data representing the relationship between a process I and its near environment by way of an offline training. Given a fault-free data set, a data window containing N samples of PES-I/O data ($u_{PESi}$, $y_{PESi}$) shall be obtained where N is a sufficiently large positive integer.

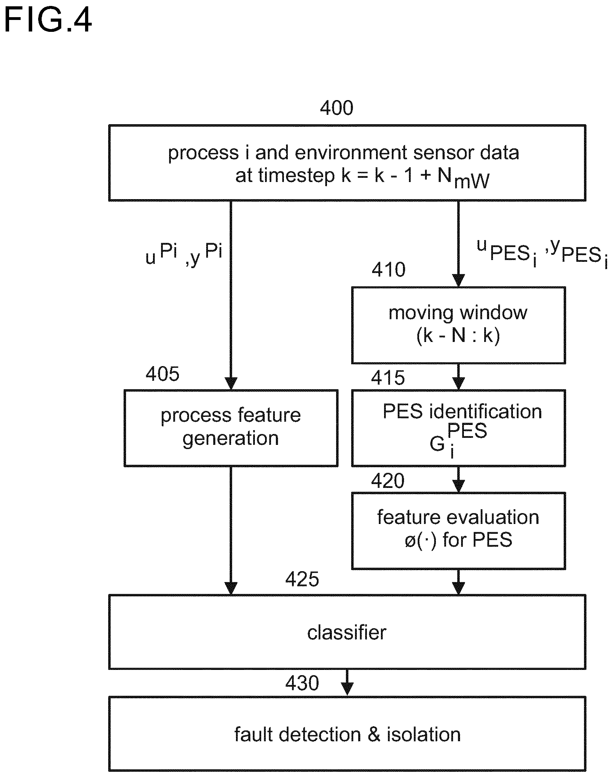

It is now referred to the schematic flow chart depicted in FIG. 4 of a herein proposed process approach being performed during an online operation. Hereby all layers can be designed according to the given requirements of an underlying process and environment. The PES $G_i^{PES}$ can be modelled as a static or dynamic system. Depending on the process and its operation, a suitable system identification method has to be chosen for the representation of the fault-free PES. During online operation, the identification of PES should be executed in a moving window manner with a suitable shift of $N_{mw}$ sample instances. The j-th identified PES $G_i^{PES}$ (k), at a time instance k, is evaluated as in equation (4) and thus can be integrated into an existing process monitoring structure of an industrial plant or process setting.

As shown in FIG. 4, after a data acquisition and pre-processing step 400 for an underlying process i, the feature generation is performed two-fold. Hereby, according to a first feature generation step 405, the acquired data for the process i, namely $u^{pi}$, $y^{pi}$, are mapped into a suitable feature space. Further, according to second feature generation steps 410 to 420, a slice of available data is selected 410, a PES system identification is performed 415 and finally the identification is transformed into an additional feature 420. These second steps 410 to 420 is accomplished in a recurring way 410 in order to represent the PES at the current time instance k and is evaluated 420 by the suitable measure $\Phi(...)$. Finally, both types of generated features are fed into a classifier 425. It has to be mentioned that instead of such a classifier, a neuronal network or any other machine learning approach can be used. If only fault-free data is available, the training and first phase of online monitoring will be a one-class classification problem. An extension for Fault isolation 430 is enabled by monitoring a number of different PESs distinguished by different types of environment sensors.

Referring to FIG.s 5 to 7, an industrial use case is described in more detail wherein the capabilities of the PES approach are illustrated on an industrial screw compressor with an incipient leakage. The screw compressor is equipped with sensors for the inlet temperature $T_{in}$ and the inlet pressure $P_{in}$, the outlet temperature $T_{out}$ and the outlet pressure $P_{out}$. The screw compressor is driven by an electric motor, for which the electrical current $I_{mot}$ as well as a winding temperature $T_{mot}$ are measured. For controlling the screw compressor, the position of a performance slider $X_{com}$ is measured. For measuring the ambience, a gas detector $Q_{env}$ placed nearby and an external temperature sensor for measuring the environmental temperature $T_{env}$ are provided. All these sensors are shown in FIG. 2.

The evaluation using an above mentioned FDI scheme, in the present embodiment, is based on 911 fault-free as well as 959 faulty samples, wherein the event of a leakage is typically defined as a parameter fault in the FDI scheme.

Referring now to FIG. 5, for the analysis two subsets of the available instrumentation are investigated. As a first subset, a single-input single-output (SISO) system based on $u_{PESi} = I_{mot}$ and $y_{PESi} = Q_{env}$ is set. In this context, the electrical current $I_{mot}$ is used to represent the electrical load as one of the most important indicators for the screw compressor operation. As a second subset, a multiple-input multiple-output (MIMO) system is defined which consists of an input vector $u_{PESi} = [I_{mot}, T_{env}]$ and an output vector $y_{PESi} = [Q_{env}, T_{mot}]$. The influence of the environmental temperature $T_{env}$ on the motor winding temperature $T_{mot}$ is known. By that, a base level of connection in the PES is included in the fault-free case.

Based on the data depicted in the four diagrams in FIG. 5, a feature comparison (see also FIG. 4) is performed. These diagrams depict four bar graphs for illustrating the coupling features according to the invention, based on the known "Frobenius" norm and the known "H2"-system norm. i.e. as norm values in the fault and fault-free case, namely by comparing the model-size (SISO/ MIMO) and the model-order (n = 0, 1). It has to be noted that the Frobenius norm is only exemplary and thus, instead of $\Phi(...)$, another evaluation approach can be used. The described reduction using $\Phi(...)$ was only chosen for better comparability purposes. It is also possible, instead of training a Frobenius norm, to use an appropriate classifier for the PES.

Based on the approach described above by way of FIG.s 3 and 4, the coupling between environment and process is quantified. Hereby, all four realizations of the PES are presented comparing model-size (SISO vs. MIMO) as well as the model-order (n = 0 vs. n = 1). Therefore, based on the fault-free load represented by $I_{mot}$, a sliding window containing N = 168 samples (obtained during one week of online operation) is selected, which moves $N_{mw} = 1$ unit for a new calculation.

In Fig. 5 the coupling between process and environment is illustrated in terms of $\Phi^{SISO}_{n=0}$, $\Phi^{SISO}_{n=1}$, $\Phi^{MIMO}_{n=0}$, $\Phi^{MIMO}_{n=1}$. In each of these combinations, the results of the utilized norm are calculated for the fault-free and the faulty data. Generally, the resulting range of feature values is different in each combination. In case of the mentioned Frobenius norm, a higher feature $\Phi^{MIMO}_{n=0}$ in comparison to $\Phi^{SISO}_{n=0}$ is attributed to a matrix of higher dimensions. Further, all systems have a higher average norm value in the faulty case in comparison to fault-free case. A higher numerical value in this context is related to a stronger coupling of process and environment.

As a result, all these combinations illustrate that fault-free cases and faulty cases can be distinguished very reliably, even though the distributions are partly overlapping. Besides, the distributions of the MIMO system have a larger overlap compared to the SISO systems. All results match the expectations based on a synthesized test dataset. In this context, an increased sliding window N for identification leads distributions with lower variance, which is limited by a minimal amount of excitement in the data. It has to be mentioned that this excitation can also be applied in the form of micro-steps to the input values of the process if there is no natural excitation possible!

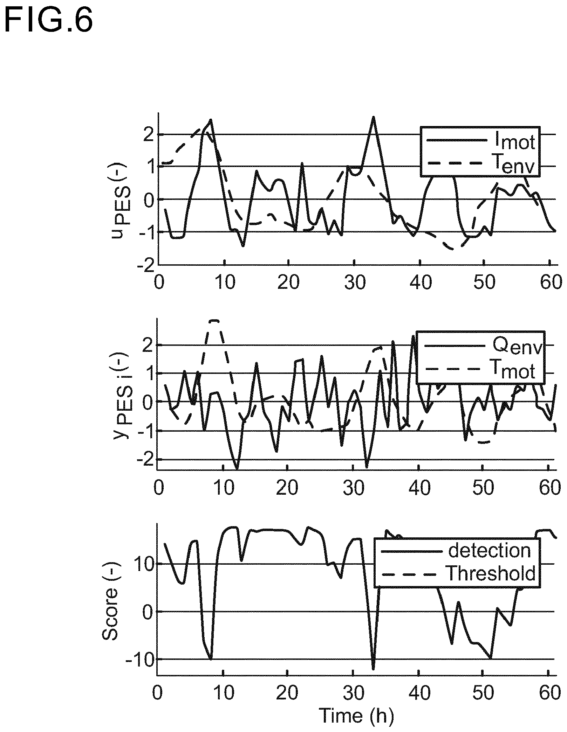

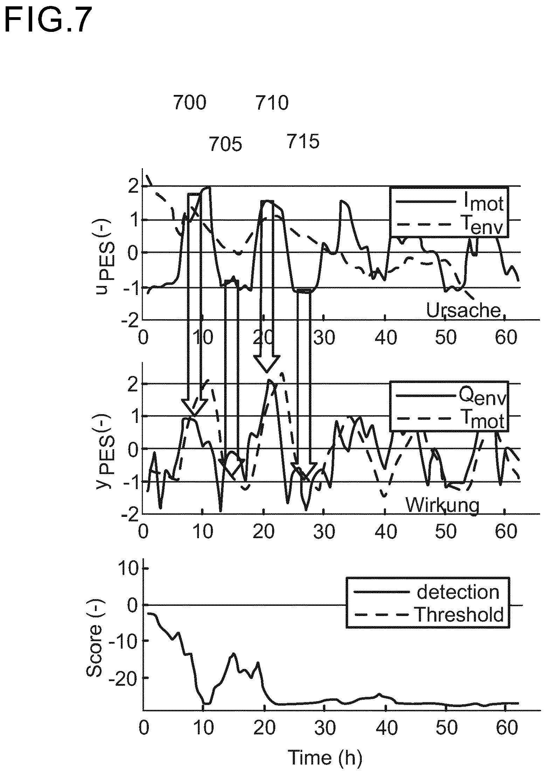

FIG. 6 illustrates the fault detection performance by way of diagrams of measured data. Only for visualization purposes, the sample of validation (fault-free) as well as the faulty data are presented normalized for anonymity in Fig. 6 and 7, respectively. In particular, the classification performance based on fault-free validation data is illustrated, wherein the input $u_{PESi}$ and the output $y_{PESi}$ of the PES are compared in the two upper sub-plots. The resulting score based on the classification of an OC-SVM (= One Class SVM, wherein SVM (= Support Vector Machine paradigm) designates a well-known approach for non-linear classification problems) is illustrated in the lowest sub-plot of FIG. 6.

More particularly, Fig. 6 shows the input $u_{PESi}$ of the PES as electrical motor current $I_{mot}$ and as environment temperature $T_{env}$. The output vector $y_{PESi}$ covers the environmental gas detector $Q_{env}$ and the motor winding temperature $T_{mot}$. It can be seen that the input signal $T_{env}$ reflects or represents the temperature change between day and night, whereas $I_{mot}$ reflects/represents the tooth-shaped load cycles of the screw-compressor. Likewise, $T_{mot}$ reflects or shows parts of the load pattern as well as influences of $T_{env}$. In contrast, $Q_{env}$ oscillates and contains a high part of noise, whereas there is no clear trend or pattern. Based on the trained OC-SVM, the data is classified into a fault-free class with score $\geq 0$ or faulty class with score < 0). Beside positive scores indicating fault-free operation, also scores below zero are visible.

FIG. 7 depicts similar diagrams as in FIG. 6 and illustrates the same sensor selection as Fig. 6 for a faulty period. But FIG. 7 serves to illustrate the detection performance based on faulty data, wherein the input $u_{PESi}$ (depicted in the top sub-plot) and the output $y_{PESi}$ (depicted in the middle sub-plot) of the PES are compared, in accordance with the shown four arrows 700, 705, 710, 715, in the two upper sub-plots. The resulting score based on the classification of an OC-SVM is illustrated in the lowest sub-plot. The input signals $u_{PESi}$ are similar to the validation dataset and the output signal $Q_{env}$ is different. Although $Q_{env}$ is still noisy, a similarity between $I_{mot}$ and $Q_{env}$ can be identified reliably. This pattern is the indicator for a coupling between environment and process in form of a leakage.

It is noted, that in the present scenario, the pattern of the motor current $I_{mot}$ can be found in the gas detector signal $Q_{env}$ rather noisy, but present enough. Further, the extension to other environmental sensors such as humidity sensors, sound sensors, etc. is possible, in order to describe the interaction between the environment and the process.

Measurement results of the above-described use case and according combinations are presented in TABLE 1. As reference, the basecase of the OC-SVM which does not takes an additional PES feature into account, the leakage detection ability is in any case better as compared to a state-of-the-art detection. Three out of the four combinations also improve the false alarm rate (FAR). In contrast to the MIMO systems, the SISO systems perform very robust, whereas the FAR as well as missed detection rate (MDR) are under the expected outlier rate of 5 % certifying a superior performance.

| Model-Size | Model-Order | FAR Training | FAR Testing | FAR Validation | MDR |
|---|---|---|---|---|---|
| Basecase | - | 5.06 | 5.59 | 6 | 89.89 |
| SISO | 0 | 5.06 | 3.91 | 2.67 | 0 |
| SISO | 1 | 5.06 | 5.59 | 2 | 2.4 |
| MIMO | 0 | 5.06 | 5.59 | 11.33 | 19.6 |
| MIMO | 1 | 5.06 | 3.91 | 4.67 | 49.3 |

TABLE 1 depicts measured statistic values on FAR (= false alarm rate) and MDR (= missed detection rate) for model-sizes and model-orders n of the PES [in percent].

As a result, the above-described industrial use case clearly illustrates the enhancement of leakage detection by fusing the monitoring of a process and its surrounded environment. Both Table 1 and FIG. 5 indicate an improved separability between fault and fault-free cases with a decreasing system complexity. One reason for that is the adaptability of the n = 1 approaches for systems of larger scale, based on a larger variety of input data. Another aspect is that the representations of PES are masking each other potentially, which is supported by the use of the norms to concentrate information.

Another advantage of the above-described framework is that it is just based on already implemented sensors and plant or process infrastructure. Even though separate monitoring of process and environment do not satisfy industrial needs, the above PES approach enables the detection of incipient leakages. Especially, the simplicity of the framework fits the industrial requirement to extend already implemented monitoring schemes easily. In addition, the above-described approach allows to reduce alarm floods for plant operating teams. In case of a detected leakage, the approach also enables the spatial localization of an incipient leakage and thus to only raise alarms on an asset connected to the environment.

**Claims**

1. Method for detecting a gaseous and/or liquid leakage in an industrial processing plant or processing plant equipment, based on data being provided by at least one sensor (100), wherein process-related data (200, 205, 215 - 235) and environmental data (210) are provided in order to combine the process-related data (200, 205, 215 - 235) and the environmental data (210), and wherein, for the evaluation of a potential leakage, a similarity measure between the process-related data (200, 205, 215 - 235) and the environmental data (210) is determined.

2. Method according to claim 1 wherein the similarity measure is determined by means of a correlation analysis, similarity analysis or root cause analysis.

3. Method according to claim 1 or 2 wherein evaluating a pre-determined limit of a sensor value (100) for an environment (103), based on a threshold (105).

4. Method according to any one or more of the preceding claims, wherein evaluation of a process (113) is accomplished by means of an FDI scheme (110) and wherein a leakage event is defined as a parameter fault in the FDI scheme.

5. Method according to claim 4, wherein the input and output variables for the FDI scheme (110) are measured process-related variables (115, 120), which are evaluated based on a model description (125) for the industrial processing plant or processing plant equipment.

6. Method according to any one or more of the preceding claims, wherein the process-related data (200, 205, 215 - 235) and the environmental data (210) comprise respective input data and output data preferably of one or more of the following physical properties of the industrial processing plant or processing plant equipment:

   - The temperature (200, 205) of the industrial processing plant or processing plant equipment;
   - the pressure (215, 220) of the industrial processing plant or processing plant equipment;
   - the electrical current (230) of the industrial processing plant or processing plant equipment;
   - the temperature (233) of the industrial processing plant or processing plant equipment;
   - a performance indicator (235) of the industrial processing plant or processing plant equipment;
   - the environmental temperature (210);
   - the environmental humidity.

7. Method according to any one or more of the preceding claims, including a process-environment system (300) which uses data from a process (305) and its environment (310) in a joint manner (315) and which is used for modelling changing aspects of the interconnection between a separate process model (320) and a separate environment model (325), based on respective input variables (330, 335).

8. Method according to claim 7, wherein the evaluation of a potential leakage is based on the relationship between the process (305) and the environment (310), wherein it is separated between the process (305) and the environment (310), based on physical boundaries, wherein a fault-free case is assumed to be a closed system which thermodynamically allows energy but no mass transfer between the process (305) and the environment (310) and wherein a faulty case is assumed to be an open system enabling mass and energy to be transferred between the process (305) and the environment (310).

9. Method according to claim 7 or 8, wherein it is assumed that the environment (310) can, in turn, influence the process (305).

10. Method according to claim 8 to 9, wherein the relationship between the process (305) and the environment (310) is evaluated by means of at least one underlying model (320, 325) which is based on input variables (335) and output variables (340) of the process-environment system (300), wherein directions of cause and effect between the process (305) and the environment (310) are synchronized, and wherein measured process-related data and environmental data are separated into cause-variables (345, 350, 355) and effect-variables (360, 365, 370).

11. Method according to any one or more of the preceding claims, wherein the evaluation of a potential leakage is based on a two-fold feature generation, including a first feature generation step (405) where the process-related data (200, 205, 215 - 235, 305) are mapped into a suitable feature space, and including second feature generation steps (410 - 420) using the process-environment system (300) for performing (415) a PES identification, wherein the second feature generation steps (410 - 420) are performed in a recurring way (410), and wherein both types of generated features are fed into a classifier (425).

12. Method for condition monitoring of an industrial processing plant or processing plant equipment in order to detect a gaseous and/or liquid leakage or to localize an incipient leakage or to detect processing faults, or for providing an according root-cause analysis, based on a method according to any one or more of the preceding claims.

13. System for the detection of a gaseous and/or liquid leakage in an industrial processing plant or processing plant equipment, comprising at least one sensor (100) for providing process-related data (200, 205, 215 - 235) and environmental data (210), and comprising processing means in order to combine the process-related data (200, 205, 215 - 235) and the environmental data (210) and to evaluate a potential leakage based on a similarity measure between the process-related data (200, 205, 215 - 235) and the environmental data (210).

14. System according to claim 13 wherein the at least one sensor (100) preferably comprises one or more of the following sensors:

   - At least one gas detector;
   - at least one ambient temperature sensor;

- at least one humidity sensor;
- at least one line- and area sensor;
- at least one monitoring camera;
- at least one acoustic sensor;
- at least one autonomous vehicle equipped with at least one gas detector and/or any of the preceding detectors/sensors.

15. A computer-implemented method or system for the detection of a gaseous and/or liquid leakage in an industrial processing plant or processing plant equipment, based on process-related data (200, 205, 215 - 235) and environmental data (210) which are, combined in order to evaluate a potential leakage based on a similarity measure between the process-related data (200, 205, 215 - 235) and the environmental data (210).

# FIG.1

# FIG.2

# FIG.3

# FIG.4

400

process i and environment sensor data
at timestep $k = k - 1 + N_{mW}$

$u^{Pi}, y^{Pi}$

$u_{PES_i}, y_{PES_i}$

410

moving window
$(k - N : k)$

405

process feature
generation

415

PES identification
$G_i^{PES}$

420

feature evaluation
$\varnothing(\cdot)$ for PES

425

classifier

430

fault detection & isolation

# FIG.5

# FIG.6

# FIG.7

Europäisches
Patentamt

European
Patent Office

Office européen
des brevets

# EUROPEAN SEARCH REPORT

Application Number

EP 22 15 6345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/071501 A1 (HERZOG JAMES P [US]) 20 March 2008 (2008-03-20) * abstract * * paragraphs [0007], [0020] – [0022], [0043] * ----- | 1-15 | INV. G01M3/00 |
| X | GB 2 507 184 A (TAKADU LTD [IL]) 23 April 2014 (2014-04-23) * abstract * * paragraphs [00034], [00043], [00059], [00073], [00078], [00079] * * figure 1 * ----- | 1-15 | |

TECHNICAL FIELDS SEARCHED (IPC)

G01M

The present search report has been drawn up for all claims

| Place of search | Date of completion of the search | Examiner |
|---|---|---|
| The Hague | 19 July 2022 | Grewe, Clemens F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 6345

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2022

| Patent document cited in search report | | Publication date | Patent family member(s) | | Publication date |
|---|---|---|---|---|---|
| US 2008071501 | A1 | 20-03-2008 | CA 2663888 | A1 | 27-03-2008 |
| | | | EP 2064626 | A2 | 03-06-2009 |
| | | | JP 2010504501 | A | 12-02-2010 |
| | | | KR 20090074768 | A | 07-07-2009 |
| | | | PL 2064626 | T3 | 11-01-2021 |
| | | | PT 2064626 | T | 07-07-2020 |
| | | | US 2008071501 | A1 | 20-03-2008 |
| | | | WO 2008036751 | A2 | 27-03-2008 |
| GB 2507184 | A | 23-04-2014 | NONE | | |

For more details about this annex : see Official Journal of the European Patent Office, No. 12/82

EPO FORM P0459

# EP 4 227 659 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Arbeitsplatzat-mosphäre - Elektrische Geräte für die direkte Detektion und direkte Konzentrationsmessung toxischer Gase und Dämpfe. *Allgemeine Anforderungen und Prüfverfahren,* 2015, vol. DIN EN, 45544-1